# EUROPÄISCHE PATENTANMELDUNG

(11) **EP 3 534 317 A1**
(43) Veröffentlichungstag der Anmeldung: **04.09.2019**
(21) Anmeldenummer: 18159386.4
(22) Anmeldetag: 01.03.2018
(51) Int. Cl.: G06Q 30/02

(54) **SYSTEM UND VERFAHREN ZUR DYNAMISCHEN VERFOLGUNG VON ELEKTRONISCHEN COUPONS UND KUNDENKARTEN**

(71) Anmelder: Gerabo GmbH, 22763 Hamburg (DE)
(72) Erfinder: SONNET, Daniel, 22763 Hamburg (DE)
(74) Vertreter: Glawe, Delfs, Moll

(57) **Zusammenfassung**

Ein Server umfasst eine Transaktionsdatenbank (72), eine Einlösungsdatenbank (73) und ein Transaktionsmodul (71) für E-Zertifikate (8), die jeweils einen Identifizierer und Datenfelder für eCoupons (80) zu Promotionsartikeln aufweisen. An Ausgabestationen werden trägerunabhängige (anonyme) Token (9) an Nutzer (1) ausgegeben. Der Token (9) umfasst einen eindeutigen, anonymen Identifier für das E-Zertifikat (8). Bei Einlösung durch Nutzer (1) an einer Akzeptanz-Station (3) prüft das Transaktionsmodul (71), ob der eCoupon (80) gespeichert und in der Einlösungsdatenbank (73) als ,frei' eingetragen ist. Nur dann wird Ausgabe des entsprechenden Promotionsartikels freigegeben. Ein Ausgabebestätigungssignal wird zum Server (7) übermittelt, das Transaktionsmodul (72) markiert den eCoupon (80) in der Einlösungsdatenbank (73) als, verbraucht'. Die E-Zertifikate (8) sind persistent zur Weiterverwendung durch denselben Nutzer (1), indem weitere eCoupons (80) in der Transaktionsdatenbank (72) zu dem E-Zertifikat (8) gespeichert werden. Es wird ein sicheres und dennoch anonymisierbares Bindungssystem geschaffen, das personentreu ist und für die Kunden wiederaufladbare E-Zertifikate bereitstellt.

## Beschreibung

Die Erfindung betrifft ein System sowie Verfahren zur dynamischen Verfolgung von elektronischen Coupons. Codes die auf realen oder virtuellen Trägern enthalten sind, können mit elektronischen Coupons aufgeladen werden. Die Einlösung an Akzeptanzstellen durch Nutzer wird dynamisch überwacht und bei einem Zentralserver gespeichert. Die Codes bleiben bei dem Server gespeichert und können erneut aufgeladen werden, für denselben Nutzer.

Herkömmliche Kundenbindungssysteme und Couponingsysteme stellen in der Regel hohe technische Anforderungen an die Einlösestation. In vielen Fällen fordern sie besondere, darauf abgestimmte Kassensysteme oder geschlossene, hardwareseitig spezialisierte Einrichtungen vorzuhalten. Beides ist ausgesprochen aufwendig. Andererseits kann darauf aber auch nicht ohne weiteres verzichtet werden, insbesondere auch um Missbrauch zu vermeiden. Dieser hohe Aufwand bei der Installation stellt eine beträchtliche Hürde dar.

Im Betrieb haben herkömmliche Kundenbindungssysteme weiter den Nachteil, dass sie meist entweder an eine Ware gebunden sind (beispielsweise mit einem Gutscheincode an oder in der Verpackung) oder vollkommen ungebunden, insbesondere nicht personengebunden sind. Letzteres bedeutet, dass sie bei Verlust von anderen Personen eingelöst werden können. Dieses ist in vielen Fällen nicht gewollt, da damit der an sich gewollte Aspekt der persönlichen Kundenbindung verloren geht. Es ist seitens der Werbetreibenden durchaus gewünscht, dass besondere Vergünstigungen zielgerichtet eingesetzt sind, nämlich nur an bekannte (und wirtschaftlich interessante) Kunden. Diese Kunden sollen dann, wenn sie auf eine erste Werbemaßnahme positiv reagiert haben, mittels weiterer Werbemaßnahmen enger angebunden werden. Eine Übertragbarkeit läuft diesem Ziel zuwider.

Eine Sicherung gegen unerwünschte Übertragung auf Dritte kann zwar durch eine Namensbindung erreicht werden. Dies hat jedoch den Nachteil, dass damit die jeweiligen Kunden namentlich in Erscheinung treten müssen. Dies ist kundenseitig nicht immer gewollt. Im Zuge größer werdenden Interesses an Datenschutz wird auch bei Einkäufen Wert gelegt auf eine möglichst große Anonymität. Dies gilt generell und noch mehr bei Gegenständen, die Rückschlüsse auf die persönliche Lebensführung zulassen (wie beispielsweise der Kauf von Medikamenten oder gewissen Genussmitteln wie Zigaretten).

Andererseits treten in vielen Branchen zusehends schärfere Anforderungen an die Auswahl der Adressatenkreise in Kraft. So sind beispielsweise im Bereich der Tabakwaren weitgehende Werbeverbote in Kraft oder in Planung, bei dem nur solche Personen adressiert werden dürfen, die zumindest volljährig sind oder - in einer verschärften Variante - ausdrücklich ihr Einverständnis erklärt haben. Dies ist mit der gewünschten Anonymität nur schwer vereinbar.

Es besteht also ein Bedarf an einem verbesserten Couponing- und Kundenbindungssystem, welches insgesamt wenig aufwendig ist sowie mittels technischer Mittel eine engere Bindung bekannter Kunden ermöglicht und dennoch dem Wunsch der Kunden nach Anonymität weitgehend nachkommen kann.

Die erfindungsgemäße Lösung liegt in einem Kundenbindungssystem nach Anspruch 1 sowie einem entsprechenden Verfahren gemäß dem unabhängigen Verfahrensanspruch. Vorteilhafte Weiterbildungen von System und Verfahren sind Gegenstand der abhängigen Ansprüche.

Bei einem Couponverfolgungssystem zur dynamischen Verarbeitung von Transaktionen elektronischer Coupons (im Folgenden kurz als "eCoupon" bezeichnet), umfassend einen Server, eine Mehrzahl von dezentralen Ausgabe-Stationen für Promotionsartikel und eine Mehrzahl von Akzeptanz-Stationen für die Promotionsartikel , wobei der Server eine Transaktions-Datenbank sowie eine Einlösungsdatenbank und ein Transaktionsmodul aufweist, das zur Schaffung und Bearbeitung von E-Zertifikaten ausgebildet ist, wobei die E-Zertifikate jeweils einen eindeutigen Identifizierer und Datenfelder für ein oder mehrere eCoupons zu den Promotionsartikeln aufweisen, ist erfindungsgemäß vorgesehen, dass die Ausgabe-Stationen dazu ausgebildet sind, einen trägerunabhängigen Token an einen Nutzer zu übergeben, Datensignale für die Ausgabe eines eCoupons für einen der Promotionsartikel zu generieren und an den Server zu übermitteln, wobei der Token einen eindeutigen, vorzugsweise anonymen, Identifier für das E-Zertifikat umfasst, und das Transaktionsmodul dazu ausgebildet ist, anhand der Datensignale das E-Zertifikat mit dem eCoupon in die Transaktions-Datenbank einzuspeichern, und bei einer Einlösung das E-Zertifikat auszulesen und zu prüfen, ob ein angefragter eCoupon in der Transaktions-Datenbank gespeichert und in der Einlösungsdatenbank als 'frei' eingetragen ist sowie ein entsprechendes Freigabesignal zu generieren oder zu sperren, und die Akzeptanz-Stationen dazu ausgebildet sind, von dem Nutzer vorgelegte Token mit einem eCoupon zu erfassen, an den Server zu übermitteln, Empfangen des Freigabesignals für den besagten eCoupon und den Promotionsartikel zu dem besagten eCoupon an den Nutzer auszugeben, und ein Ausgabe-Bestätigungssignal an den Server zu übermitteln, und das Transaktionsmodul ferner dazu ausgebildet ist, auf das Ausgabe-Bestätigungssignal den eCoupon in der Einlösungsdatenbank als 'verbraucht' zu markieren, wobei die E-Zertifikate persistent ausgeführt sind zur wiederholten Verwendung durch denselben Nutzer, indem ein weiterer eCoupon in der Transaktions-Datenbank zu dem E-Zertifikat gespeichert ist.

Die Erfindung schafft somit ein sicheres und dennoch anonymisierbares Bindungssystem, welches für die einzelnen Kunden wiederaufladbare E-Zertifikate bereitstellt, die personentreu sein können. Die Erfindung hat erkannt, dass durch ein solches System mit der beanspruchten Konfiguration von Transaktions-Datenbank und Einlösungsdatenbank der bisher unauflösbar erscheinende Widerspruch zwischen der kundenseitig gewünschten Anonymität einerseits und personentreuer Kundenbindung andererseits gelöst werden kann. Dank eindeutigem Identifikationsmerkmal ist das E-Zertifikat mit dem jeweiligen Kunden verknüpft, ohne dass dazu dessen Namen bekannt zu sein braucht; durch die Nachladbarkeit kann genau dieser Kunde weiterhin eng angebunden werden durch weitere Maßnahmen; ferner wird der Gefahr einer Doppel- oder Mehrfacheinlösung wirksam entgegengewirkt.

Nachfolgend seien einige verwendete Begriffe erläutert.

Unter einer Ausgabe-Station wird eine Einheit verstanden, welche die eCoupons an interessierte Nutzer ausgibt. Erfindungsgemäß ist eine Mehrzahl von Ausgabe-Stationen vorgesehen, die dezentral sind. Häufig sind sie auch mobil, umso näher an potentielle Nutzer zu kommen. Dies können beispielsweise Promoter sein, die an entsprechenden Lokalitäten (z.B. Rauchergaststätten) auftreten, an denen eine hohe Präsenz von potentiellen Kunden erwartet wird.

Ein Promotionsartikel ist ein Gegenstand, eine Dienstleistung oder eine andere Art von Vergünstigung, den oder die von der Ausgabe-Station an den Kunden ausgehändigt wird. Der Promotionsartikel kann insbesondere ein anfassbares Gut sein (wie eine Schachtel Zigaretten), oder auch ein Gutschein.

Unter einem Token wird eine Entität verstanden, welche als in der Regel sichtbares Übertragungsmedium für den eCoupon an den Kunden dient. Der Token kann verbunden sein mit dem Promotionsartikel; unbedingt erforderlich ist dies aber nicht. Generell gilt, dass der Token trägerbehaftet (beispielsweise eine Plastik- oder Papierkarte) oder trägerlos sein kann (beispielsweise nur virtuell existiert in Gestalt einer E-Mail oder einer von der Ausgabe-Station an den Nutzer übermittelten Botschaft, wie einer SMS oder MMS oder einer Nachricht über ein soziales Netzwerk wie WhatsApp oder Facebook etc..

Unter einer Akzeptanz-Station wird eine Einheit verstanden, an welcher der Kunde seinen eCoupon einlösen kann. Im Gegenzug wird er dafür einen Gegenstand, eine Dienstleistung oder eine andere Art von Vergünstigung erhalten (hier kurz als Promotionsartikel bezeichnet) . Hat der Kunde beispielsweise eine Gutscheinkarte als Token erhalten, so kann er diesen in der Akzeptanz-Station gegen einen Promotionsartikel eintauschen. Bei den Akzeptanz-Stationen kann es sich insbesondere um Einzelhandelsgeschäfte, Tankstellen oder Ähnliches handeln, die zur Abgabe von Waren und/oder Dienstleistungen ohnehin bereits vorhanden sind. Darunter fallen auch internetfähige Artikelautomaten (Getränke-, Snack- und Zigarettenautomaten. Meist sind die Akzeptanz-Stationen verschieden von der Ausgabe-Station, jedoch kann im Einzelfall auch vorgesehen sein, dass eine Akzeptanz-Station auch als Ausgabe-Station (für dieselbe oder eine andere Werbekampagne) fungiert.

Bei dem eindeutigen Identifikationsmerkmal handelt es sich um eine Zahlen-Nummern-Kombination, die auch als QR-Code dargestellt sein kann.

Der Server fungiert erfindungsgemäß als zentrale Verarbeitungseinheit. Er steht in Kontakt mit den Ausgabe-Stationen sowie den Akzeptanz-Stationen. In der Regel wird der Server räumlich getrennt angeordnet sein (im Sinne eines Backoffice). Jedoch soll nicht ausgeschlossen sein, dass der Server räumlich verteilt ausgeführt ist (dies gilt insbesondere bei großen, länderweit arbeitenden Systemen) oder im Einzelfall auch mit einer Ausgabe-Station oder einer Akzeptanz-Station zusammenfällt.

Eine Generierung von Codes für E-Zertifikate und elektronischen Coupons erfolgt vorzugsweise zentral durch den Server. Es soll aber nicht ausgeschlossen sein, dass dies auch dezentral unter Einbeziehung der Ausgabe-Stationen erfolgt. Die Codeerzeugung ist zweckmäßigerweise so ausgeführt, dass individuelle und gesicherte Codes erzeugt werden, die mittels einer gesicherten Daten-Verbindung zwischen Server und den weiteren Beteiligten, insbesondere den Ausgabe-Stationen sowie den Akzeptanz-Stationen, übertragen werden. Mit Vorteil erfolgt die Zuordnung erst bei der Ausgabe durch die Ausgabe-Stationen. Es werden dann die elektronischen Coupons erst bei der Übergabe an den Kunden einem bestimmten Promotionsartikel zugeordnet, diese Zuordnung wird entsprechend vom Server in das E-Zertifikat eingetragen.

Zweckmäßigerweise sind die Ausgabe-Stationen als mobile Computereinheiten ausgeführt, insbesondere in Gestalt von Smartphones mit einem angepassten Applikationsprogramm oder Minirechnern, z.B. "Raspberry pi". Mit geringem Aufwand und Kosten kann so eine große Anzahl an hochmobilen Ausgabe-Stationen geschaffen werden, wie sie insbesondere für Promotionsaktionen in der Öffentlichkeit von großer Bedeutung sind. Die Smartphones können leicht praktisch überallhin mitgeführt werden, sodass die angestrebten Promotionsmaßnahmen nahezu an allen Orten ausgeführt werden können. Weiter bieten Smartphones den Vorteil, dass sie von Haus aus mit einer Datenverbindung ausgerüstet sind und somit ohne weiteres zur sicheren Kommunikation mit dem Server verwendet werden können.

Vorzugsweise sind die Ausgabe-Stationen und/oder die Akzeptanz-Stationen von der Transaktions-Datenbank zumindest teilweise isoliert, und zwar insbesondere in Bezug auf die im E-Zertifikat gespeicherten persönlichen Daten des Nutzers. Dies bietet den Vorteil, dass dann, wenn persönliche Daten im E-Zertifikat gespeichert sind, diese nicht nach außen geraten, und insbesondere somit dem Nutzer eine anonyme Entgegennahme wie auch Einlösung der elektronischen Coupons ermöglicht wird.

Insbesondere wenn das einzulösende Produkt dies verlangt, sind die Ausgabe-Stationen optional eingerichtet für eine Altersverifikation und Übermittlung von deren Ergebnis an das Transaktionsmodul zur Einspeicherung in das E-Zertifikat. In vielen Fällen bestehen gesetzliche Anforderungen, dass nur bestimmte Kundengruppen angesprochen bzw. mit Promotionsartikeln versorgt werden dürfen. Dies gilt beispielsweise in Bezug auf den Vertrieb von Zigaretten oder Spirituosen. Die Ausgabe-Station ist diejenige, die realen Kontakt zum Konsumenten hat und damit eine Verifikation vornehmen kann, beispielsweise in Bezug auf das Alter. Dies sei am Beispiel der Volljährigkeit erläutert: wenn die Anforderung ist, dass die Kunden volljährig sein müssen, so kann die Ausgabe-Station zur Überprüfung des Personalausweises oder zur Ausführung eines anderen offiziellen oder privaten Altersverifikationssystems (z.B. Schufa-Alterscheck) eingerichtet sein; im Sinne einer besseren Anonymisierung kann aber auch vorgesehen sein, dass seitens der Ausgabe-Station bei der Ausgabe von elektronischen Coupons ein Merkmal gesetzt wird, wenn der Nutzer älter zu sein scheint als beispielsweise 25 Jahre. Zweckmäßigerweise wird hierbei nur das Altersmerkmal gesetzt, weitere identifizierende Angaben (wie Namen) aber nicht übertragen. Auf diese Weise kann eine hinreichend rechtssichere und dennoch anonyme Altersverifikation in Bezug auf Volljährigkeit durchgeführt werden. In entsprechender Weise können die Ausgabe-Stationen auch weitergebildet sein zur Bestimmung einer Zugehörigkeit des Nutzers zu einer vordefinierten Gruppe und Übermittlung von einem entsprechenden Gruppenmerkmal an das Transaktionsmodul zur Einspeicherung in das E-Zertifikat. Dies stellt eine beträchtliche Vereinfachung in Bezug auf die Durchführung von Werbemaßnahmen dar, die sich zielgerichtet an bestimmte Personengruppen richten. Da diese Bestimmung von Seiten der Ausgabe-Station vor Ort durchgeführt wird, ist eine Aufhebung der Anonymisierung zu diesem Zweck nicht erforderlich. Da erfindungsgemäß das E-Zertifikat personentreu ist, braucht diese Verifikation/Bestimmung nicht mehr wiederholt zu werden, sondern kann für zukünftige Verwendung des nämlichen E-Zertifikats erhalten bleiben.

Mit Vorteil ist am Server ein Zugangsmodul mit einem InternetInterface vorgesehen, wobei das Zugangsmodul so ausgeführt ist, um Nutzern eine Eingabe von weiteren Informationsdaten zu ermöglichen und deren Speicherung in dem E-Zertifikat. Damit kann den Nutzern eine Option eingeräumt werden, das E-Zertifikat mit zusätzlichen Informationen anzureichern. Dies können beispielsweise Kontaktdaten sein, wenn der Nutzer ausdrücklich am Empfang von weiterführenden Informationen interessiert ist. Bei Nutzung dieser Option wird die angestrebte Anonymisierung zwar zumindest teilweise aufgehoben, allerdings besteht sie weitgehend fort, da weiterhin weder die Ausgabe-Stationen noch die Akzeptanz-Stationen Informationen über die Identität der Nutzer erhalten. Zweckmäßigerweise ist zu diesem Zweck eine Art Firewall vorgesehen, über welche die Ausgabe-Stationen sowie die Akzeptanz-Stationen zugreifen und die persönliche Daten des Nutzers, insbesondere dessen Kontaktdaten, sperrt.

Am Server ist vorzugsweise ein Limitierungsmodul vorgesehen, in das Einträge für Volumen und/oder Zeitlimits betreffend Ausgabe/Einlösung von eCoupons eingespeichert sind, und das ferner mit dem Transaktionsmodul so zusammen wirkt, dass ein Ausgeben des Promotionsartikels außerhalb der Limits gesperrt ist. Auf diese Weise wird eine präzise Budgetierung sowie Zeitraumsteuerung ermöglicht. Die Ausgabe von Promotionsartikeln wird eingestellt, wenn eine bestimmte Höchstmenge erreicht ist. Ferner können die elektronischen Coupons mit einem Gültigkeitszeitraum versehen werden und/oder überhaupt das Einlösen auf bestimmte Aktionszeiträume konzentriert werden. Die Steuerbarkeit von Werbekampagnen verbessert sich dadurch erheblich.

Mit Vorteil wirkt das Transaktionsmodul ferner mit einem Clearance-Modul zusammen, und zwar derart, dass Abrechnungsdaten an Lieferanten der Promotionsartikel und Gutschriften an die Akzeptanz-Stationen generiert werden. Somit könnte die finanzielle Vergütung für die Herausgabe von Promotionsartikel durch Akzeptanzstellen, direkt durch den Hersteller über das Clearance-Model ermöglicht werden. Es ergibt sich so die Möglichkeit zur unmittelbaren und direkten Abrechnung, ohne dass dazu weitere Dienstleister involviert werden müssen. Damit kann das erfindungsgemäße Verfolgungssystem auch die Anonymität der Nutzer bis hin zur Abrechnung unter den Teilnehmern leisten.

Die Erfindung erstreckt sich ferner auf ein entsprechendes Verfahren. Zur näheren Beschreibung wird auf vorstehende Erläuterung zu dem System verwiesen, die sinngemäß auch für das Verfahren gilt.

Die Erfindung wird nachfolgend unter Bezugnahme auf die beigefügte Zeichnung anhand eines Ausführungsbeispiels näher erläutert. Es zeigen:
- Fig. 1: eine Übersichtsdarstellung eines Ausführungsbeispiels in Gestalt eines Blockdiagramms;
- Fig. 2: eine Funktionsdarstellung des Ausführungsbeispiels gemäß Fig. 1
- Fig. 3a-c: Phasenansichten zur Weiterverwendung eines E-Zertifikats durch Aufladen;
- Fig. 4: eine Funktionsdarstellung zu einer Variante, bei der eine Akzeptanz-Station zusätzlich als Ausgabe-Station fungiert;
- Fig. 5: eine Funktionsdarstellung zu einem Reporting;
- Fig. 6: eine Funktionsdarstellung zu einer Limitierung;
- Fig. 7: eine Funktionsdarstellung zu einer Zeitraumsteuerung;
- Fig. 8: eine Funktionsdarstellung zur Anonymisierung von Nutzern; und
- Fig. 9: eine Blockdarstellung zur Sicherung der Anonymisierung mittels Firewall.

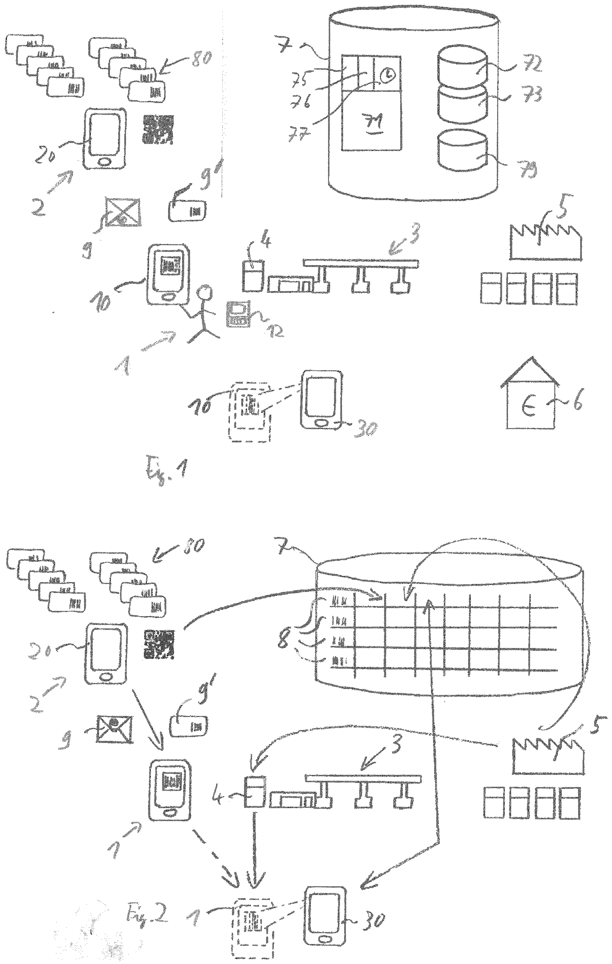

Ein Ausführungsbeispiel für ein Couponverfolgungssystem gemäß der vorliegenden Erfindung ist in einer Übersichtsdarstellung in Figur 1 visualisiert. Zentrale Einheit des Verfolgungssystems ist ein Server 7, der ein Transaktionsmodul 71 sowie mehrere Datenbanken 72, 73 und 79 umfasst. Bei den Datenbanken handelt es sich um eine Transaktions-Datenbank 72, eine Einlöse-Datenbank 73 sowie eine optionale und - sofern vorhanden - besonders geschützte Kunden-Datenbank 79.

Das Verfolgungssystem umfasst ferner eine Mehrzahl von Ausgabe-Stationen 2 zur Ausgabe von elektronischen Coupons 80 an Nutzer 1. Die elektronischen Coupons 80 sind an sich körperlos und können auf digitalem Weg (beispielsweise per SMS, MMS, Email oder Nachricht in sozialen Netzwerken 9) oder mittels eines Trägermediums (Karte 9') an den Nutzer 1 übertragen werden. Eine Einlösung gegen Promotionsartikel 4 erfolgt bei einer Akzeptanz-Station 3. Ausgegebene Promotionsartikel 4 werden nach einiger Zeit ersetzt von einem Hersteller 5. Zur Bezahlung der Promotionsartikel 4 an die ausgebende Akzeptanz-Station 3 ist eine Clearing-Station 6 vorgesehen. Gesteuert und koordiniert ist das System durch einen Server 7, der das Transaktionsmodul 71 sowie die Datenbanken (Transaktions-Datenbank 72, Einlöse-Datenbank 73 und optional eine Kunden-Datenbank 79) umfasst. Optional kann ferner noch für die Nutzer ein Interface 12 (meist als Webinterface ausgeführt) vorgesehen sein, mittels dem der Nutzer 1 freiwillig Zusatzdaten (favorisierte Marken, Kontaktadressen etc.) bei dem Server 7 speichern kann.

Die Ausgabe-Stationen 2 dienen zur Ausgabe von elektronischen Coupons 80 an Nutzer 1 (potentielle Kunden). Bei den Ausgabe-Stationen 2 kann es sich insbesondere um Promoter bei einer vor Ort durchzuführenden Werbeaktion handeln. Die Ausgabe-Stationen 2 benötigen keine aufwendige Hardware, sondern es genügt für die vorliegende Erfindung ein handelsübliches Smartphone 20, welches mit einem Anwendungsprogramm (App) oder ein Minicomputer (Rasberry pi) zur Kommunikation mit dem Server 7 im Rahmen der Erfindung versehen ist.

In Fig. 1 und 2 sind die elektronischen Coupons 80 symbolhaft dargestellt. Sie dienen dazu, einen bestimmten Promotionsartikel 4 zu definieren, den ein Nutzer 1 im Rahmen einer Promotionsmaßnahme erhalten soll. Hierbei kann es sich insbesondere um einen Gegenstand handeln, eine Dienstleistung oder eine andere Art von Vergünstigung. Im Regelfall sind die elektronischen Coupons 80 trägerlos, d. h. sie sind in dem Smartphone 20 der Ausgabe-Station 2 gespeichert bzw. werden von Server 7 generiert und zur Ausgabe-Station 2 übermittelt. Sie werden vorzugsweise auf elektronischem Weg zu dem Nutzer 1 übermittelt. Dazu ist vorgesehen, dass der Nutzer 1 zweckmäßigerweise ebenfalls über ein Smartphone 10 verfügt, um so die elektronischen Coupons 80 zu empfangen. Zweckmäßigerweise geschieht die Übertragung beispielsweise mittels einer SMS, MMS, einer WhatsApp-Nachricht oder sonstige soziale Netzwerke oder einer E-Mail 9. Es soll aber nicht ausgeschlossen sein, dass die elektronischen Coupons 80 auf einem Träger, wie einer Plastik- oder Papierkarte 9', aufgebracht sind; erforderlich ist dies aber nicht. Auf diese Weise wird der elektronische Coupon 80 von der Ausgabe-Station 2 beispielsweise im Rahmen einer Werbeaktion direkt vor Ort von dem Promoter individualisiert, d.h. dieser elektronische Coupon 80 wird in ein elektronisches Zertifikat 8 in dem Server 7 eingetragen. Damit kann der Besitzer dieses Coupons einen bestimmten Vorteil erhalten, vorliegend symbolisiert durch den Promotionsartikel 4 (z. B. kann es sich um eine Produktprobe, eine Dienstleistung, einen Gutschein oder um andere Vorteile handeln).

Der so auf elektronischem Weg (oder alternativ klassisch mittels einer Karte) übermittelte elektronische Coupon bildet somit einen Token 9, 9', der an den Nutzer 1 übergeben wird. Der Token 9, 9' mit dem elektronischen Coupons 80 wird daraufhin in dem Smartphone 10 des Nutzers 1 gespeichert. Darüber wird der Nutzer 1 bei der Einlösung legitimiert. Bei dem Server 7 liegt hingegen vorzugsweise keine Information über die Identität des Nutzers 1 vor.

Nachfolgend kann der Nutzer 1 zu einer an sich beliebigen, an dem erfindungsgemäßen Verfolgungssystem teilnehmenden Akzeptanz-Station 3 gehen. Dort erhält er gegen Vorlage des Tokens 9, 9' den Promotionsartikel, wie er durch den elektronischen Coupon 80 definiert ist. Die Akzeptanz-Station 3 ist ebenfalls mit einem Smartphone 30 ausgerüstet. Dieses ist mit einer App versehen zur Kommunikation mit dem Server 7. Diese ist dazu ausgebildet, von dem Token 9, 9' den elektronischen Coupon 80 einzulesen und an den Server 7 zu übermitteln. Der Server 7 ist, wie nachfolgend noch näher ausgeführt werden wird, dazu ausgebildet, mittels des Transaktionsmoduls 71 das entsprechende E-Zertifikat 8 aus der Transaktions-Datenbank 72 aufzurufen, die dazu gespeicherten elektronischen Coupons 80 einzulesen und durch Abfrage der Einlöse-Datenbank 73 festzustellen, ob der jeweilige elektronische Coupon 80 bereits eingelöst wurde oder nicht. Ist er noch nicht eingelöst worden, so wird ein entsprechendes Freigabesignal an die Akzeptanz-Station 3 übermittelt, und dort auf dem Display des Smartphones (oder im Falle einer Kassenintegration des Systems an der Kasse) 30 angezeigt. Der Betreiber der Akzeptanz-Station 3 enthält damit eine eindeutige und in Echtzeit verifizierte Bestätigung, dass der elektronische Coupon 80 gültig ist. Damit ist verifiziert, dass der elektronische Coupon 80 zur Aushändigung des Promotionsartikels 4 berechtigt ist. Somit erhält der Nutzer 1 den Promotionsartikel 4. Gleichzeitig mit der Ausgabe des Promotionsartikels 4 an den Nutzer 1 wird von dem Server 7 in der Einlöse-Datenbank 73 der entsprechende elektronische Coupon 80 als "verbraucht" markiert. Eine weitere Ausgabe von dem Promotionsartikel 4 auf Basis desselben elektronischen Coupons 80 ist damit nicht mehr möglich.

Auf diese Weise wird eine Sicherung gegenüber Mehrfacheinlösung eines elektronischen Coupons 80 bzw. gegenüber Fälschungen erreicht, indem bei der Akzeptanz-Station 3 eine Echtzeit Abfrage bei dem Server 7 vor der Herausgabe des Promotionsartikel s 4 erfolgt. Durch die gemäß Erfindung mögliche Verwendung von handelsüblichen Smartphones sowohl bei der Ausgabe-Station 2 wie auch bei der Akzeptanz-Station 3 kann dies ohne nennenswerten zusätzlichen Hardwareaufwand erfolgen.

Ein entscheidender Vorteil der Erfindung ist es, dass die Akzeptanz-Station sich durch die Prüfung des elektronischen Gutscheins 80 und der darauffolgenden Bestätigung durch das Transaktionsmodul 71 des Servers sicher sein kann, dass sie bei der Herausgabe des Promotionsartikel s 4 entsprechend vergütet werden wird. Damit werden Verluste durch unberechtigte Einlösung von elektronischen Coupons 80 sicher vermieden. Somit steigt auch die Bereitschaft von Akzeptanz-Stellen 3 zur Teilnahme an dem elektronischen Couponsystem.

Gleichzeitig kann der Server 7 mit der Clearing-Station 6 zusammenwirken, um eine entsprechende Vergütung der Akzeptanz-Station 3 für die Herausgabe des Promotionsartikels 4 zu erreichen. In diesem Falle wäre die finanzielle Vergütung der Herausgabe von Promotionsartikel 4 durch eine Akzeptanzstelle 3 unmittelbar durch den Hersteller 5 unter Einbindung der Clearing-Station 6, möglich. Ferner kann die Clearing-Station 6 entsprechend mit dem Produkthersteller 5 für die Promotionsartikel 4 (oder einem anderen Auftraggeber für die Promotionskampagne) zusammenwirken.

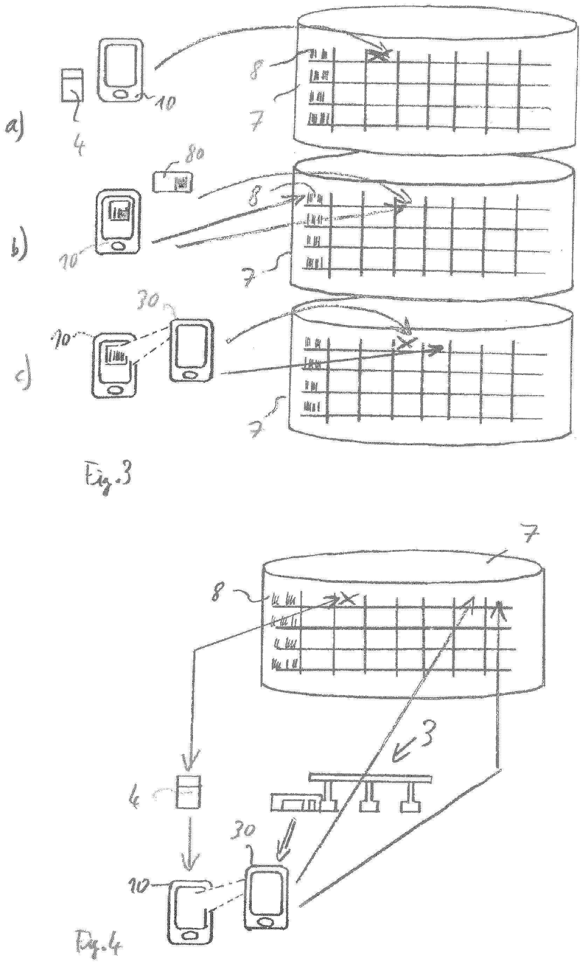

Eine weitere Besonderheit der Erfindung wird nachfolgend unter Bezugnahme auf Figur 3 erläutert. Am Server 7 seien mehrere E-Zertifikate 8 gespeichert, die bereits teilweise verschiedenen Kunden zugeordnet sind. Es sei angenommen im Fall des Zertifikats 8 in der ersten Zeile, dass der Kunde K1 den ihm zugeteilten elektronischen Coupon 80 bereits für einen Promotionsartikel eingelöst habe, und zwar bei einer Akzeptanz-Station "A". Dies ist in Figur 3 a) dargestellt.

Derselbe Kunde 1 erhält nun von einer (anderen oder derselben) Ausgabe-Station erneut einen elektronischen Coupon 80, beispielsweise für einen anderen Promotionsartikel. Indem von der Ausgabe-Station der Token 9, 9' mit dem elektronischen Coupon 80 an das Smartphone 10 oder auch das bestehende physische Medium wie Plastik- oder Papierkarte 9 des Benutzers 1 übermittelt wird, wird entsprechend das E-Zertifikat 8 in der Transaktions-Datenbank 72 des Servers 7 aktualisiert, d.h. es wird mit dem Code des neu ausgegebenen elektronischen Coupons 80 aufgeladen. Dies ist in Figur 3 b) dargestellt.

Schließlich geht dieser Kunde zu der Akzeptanz-Station 3 und lässt dort von dem Smartphone 30 der Akzeptanz-Station 3 sein eigenes Smartphone 10 (oder physischem Medium 9) mit dem Code für das E-Zertifikat scannen. Da das an sich "alte" E-Zertifikat neu aufgeladen wurde (siehe Figur 3 b)), erhält der Kunde nunmehr entsprechend dem neu aufgeladenen elektronischen Coupon 80 einen neuen Promotionsartikel 4. Dabei wird die Identität der ausgebenden Akzeptanz-Station 3 in dem E-Zertifikat vermerkt, vorliegend handelt es sich um die Akzeptanz-Station "B". Erfindungsgemäß bleibt auch nach dieser erneuten Einlösung das E-Zertifikat 8 weiterhin erhalten (es persistiert), um so bei Bedarf wieder erneut von einer Ausgabe-Station 2 aufgeladen werden zu können.

Es wird bezugnehmend auf Figur 4 nunmehr der Fall erläutert, dass die Akzeptanz-Station 3 zusätzlich als Ausgabe-Station fungiert. Die Erläuterung schließt sich an die Erläuterung zu Figur 3. Nachdem der Kunde nun bei Akzeptanzstelle "B" seinen vorhandenen elektronischen Coupon 80 gegen einen Promotionsartikel 4 eingelöst hat, spricht ihn der Betreiber der Akzeptanz-Station 3 (es sei angenommen, es handele sich um eine Tankstelle) an und gibt als weiteren Promotionsartikel einen Tankgutschein für seinen eigenen Betrieb aus. Dieser Tankgutschein wird ebenfalls als elektronischer Coupon dem Kunden übergeben und, wie bereits vorstehend erläutert, in dem E-Zertifikat 8 des Kunden im Server 7 entsprechend eingespeichert. Damit wird das E-Zertifikat 8 wiederum erneut verwendet. Der Kunde kann nun in der bereits beschriebenen Weise einen elektronischen Gutschein einlösen (hier: für Tanken als Bonus). Indem dank der Erfindung ein Smartphone sowohl für die Ausgabe-Station 2 wie auch für die Akzeptanz-Station 3 verwendet werden kann, ist es ermöglicht, dass diese die Rollen tauschen können, ohne dass es dazu beträchtlicher zusätzlicher Ausrüstung bedarf.

Am Server 7 ist vorzugsweise ferner ein Berichtsmodul 75 angeordnet. Es ist dazu ausgebildet, aus den in den E-Zertifikaten 8 enthaltenen Daten über die ausgegebenen elektronischen Coupons 80 und der in der Einlösungsdatenbank 73 enthaltene Informationen über die Einlösung ein umfassendes Reporting zu erstellen. Anhand dieses Reportings können die Akzeptanz-Stationen 3, die Hersteller 5 sowie auch andere Auftraggeber von Werbemaßnahmen umfangreiche und aktuelle Berichte über die ausgegebenen und eingelösten elektronischen Coupons 80 erhalten.

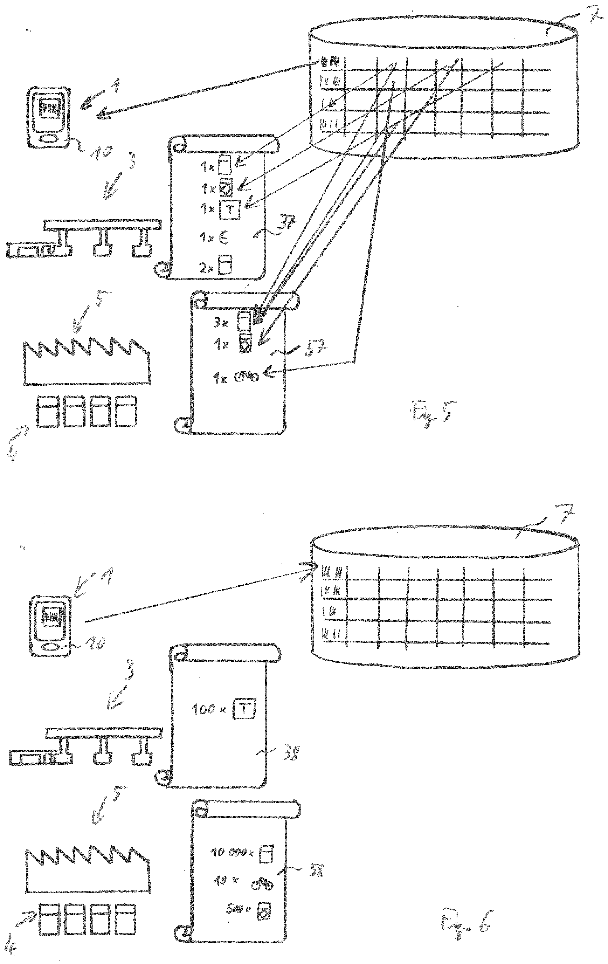

Wie in Figur 5 beispielhaft dargestellt ist, erhält so die Akzeptanz-Station 3 einen Ausgabebericht 37. Darin sind die von der Akzeptanz-Station 3 auf vorgelegte elektronische Coupons 80 an verschiedene Nutzer 1 ausgegebenen Promotionsartikel aufgelistet. Bei dem dargestellten Ausführungsbeispiel handelt es sich um die Ausgabe von je einer Schachtel von zwei verschiedenen Zigarettenmarken, einen Tankgutschein, eine Barauszahlung sowie von zwei weiteren Zigarettenschachteln. Dieser Ausgabebericht kann summarisch sein oder, wie dargestellt, nach dem jeweiligen E-Zertifikat organisiert. In entsprechender Weise wird von dem Berichtsmodul 75 ein Fortschritts-Bericht 57 erstellt für den Hersteller 5 bzw. den Auftraggeber einer Werbekampagne. Darin ist aufgelistet, welche Promotionsartikel bereits im Rahmen der Werbekampagne ausgegeben wurden.

Ferner ist am Server 7 ein Limitierungsmodul 76 vorgesehen. Damit wird dem Hersteller 5 bzw. einem Auftraggeber einer Werbekampagne die Möglichkeit geboten, die Anzahl der auszugebenden elektronischen Coupons 80 und/oder die Anzahl der auszugebenden Promotionsartikel 4 genau zu begrenzen. Es wird von dem Limitierungsmodul 76 nur die Aufladung von so vielen E-Zertifikaten 8 mit elektronischem Gutschein 80 freigegeben, wie der Hersteller auch tatsächlich bereit ist auszugeben. Wird im Laufe der Zeit das Limit für einen der Promotionsartikel 4 erreicht, so sperrt das Limitierungsmodul 76 die weitere Aufladung mit entsprechenden elektronischen Coupons 80. Damit wird eine erfolgreiche Budgetierung erreicht.

In Figur 6 sind beispielhaft Vorgabelisten dargestellt. So setzt beispielsweise der Hersteller 5 auf seiner Vorgabeliste 58 das Limit, maximal 10.000 Stück der von ihm vertriebenen Zigarettenpackungen als Promotionsartikel 4 auszugeben sowie 500 weitere Zigarettenpackungen seiner Zweitmarke. Die Budgetierung ist aber nicht auf originäre Produkte des Herstellers 5 beschränkt, sondern kann auch an sich artfremde (zugekaufte) Promotionsartikel 4 umfassen, wie beispielsweise Fahrräder, für die vorliegend ein niedriges Limit von 10 Stück vorgegeben ist. Das Limitierungsmodul 76 ist nicht auf einen Hersteller 5 begrenzt, sondern kann ebenso eine Budgetierung bei den Akzeptanz-Stationen 3 vornehmen. So kann beispielsweise eine Tankstelle als Akzeptanz-Station 3 mit seiner Vorgabeliste 38 ein Budget in der Weise begrenzen, wonach für 100 Tankgutscheine entsprechende elektronische Coupons 80 ausgegeben werden können.

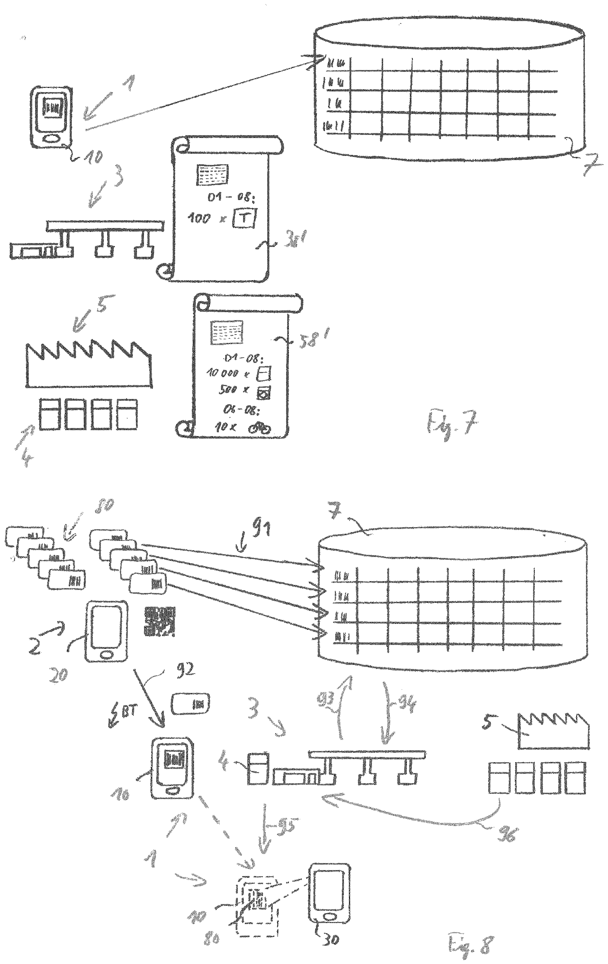

Das Limitierungsmodul 76 kann zusammenwirken mit einem Zeitsteuermodul 77. Es ist dazu ausgebildet, einen Zeitraum zu definieren, über den die Werbekampagne laufen soll. Damit wird nicht nur eine mengenmäßige, sondern auch eine zeitlich punktgenaue Steuerung erreicht. Ferner gibt dies die Möglichkeit, die ausgegebenen elektronischen Coupons 80 zeitlich zu befristen, sodass sie nach einem bestimmten Zeitraum bzw. Zeitpunkt nicht mehr eingelöst werden können, sondern verfallen. Dies ist in Figur 7 dargestellt. Dort sind Vorgabelisten 38' und 58' vorgesehen, die aufbauen auf die in Figur 6 dargestellten Vorgabelisten 38, 58. Gemäß Figur 7 sind sie jedoch um eine kalendarische Komponente ergänzt. Für die Akzeptanz-Station 3 ist die Vorgabe, dass die elektronischen Coupons 80 für die 100 Tankgutscheine lediglich im Zeitraum von Januar bis August ("01-08") gelten; und seitens des Herstellers 5 ist die Vorgabe dahingehend erweitert, dass die Ausgabe der Zigarettenpackungen gültig erfolgen kann im Zeitraum ebenfalls von Januar bis August ("01-08"), hingegen der Aktionszeitraum für die Fahrräder nur gilt während eines verkürzten Zeitraums im Sommer, nämlich von Juni bis August ("06-08"). Dies wird von dem Zeitsteuermodul überwacht.

Eine besondere Leistung der Erfindung ist es, dass bei dem erfindungsgemäßen Verfolgungssystem all diese feinen Steuerungsfähigkeiten erreicht werden können, ohne dass dafür die Anonymität der Kunden aufgegeben zu werden braucht. Die einzelnen elektronischen Coupons 80 werden bei der Generierung bzw. Ausgabe eindeutig jeweils einem E-Zertifikat 8 zugeordnet (s. Pfeile 91). Dies gilt unabhängig davon, ob die elektronischen Coupons 80 trägerlos oder trägerbehaftet sind. Seitens der Ausgabe-Station 2 werden die elektronischen Coupons 80 im Rahmen der Werbekampagne an Kunden 1 übergeben (s. Pfeil 92). Dies kann geschehen, ohne hierbei den Kunden zu erfassen (beispielsweise durch Übergabe des elektronischen Coupons 80 auf einer Karte, oder indem der Kunde 1 den auf einem Display des Smartphones 20 der Ausgabe-Station 2 angezeigten elektronischen Coupon 80 einscannt mit seinem Smartphone 10 oder einfach durch Bluetooth-Kurzstreckenfunk). Eine Erfassung des Kunden 1 ist hierbei nicht erforderlich. Der Kunde könnte somit vollkommen anonym bleiben.

Der Kunde 1 kann dann zu einer an sich beliebigen, an dem erfindungsgemäßen Verfolgungssystem teilnehmenden Akzeptanz-Station 3 gehen (siehe gestrichelter Pfeil). Dort wird sein elektronischer Coupon 80 gescannt, beispielsweise mittels des Smartphones 30 der Akzeptanz-Station 3, und es wird entsprechend ein Datensignal an den Server 7 gesendet (s. Pfeil 93). Der Server 7 ruft in der Transaktionsdatenbank 72 das entsprechende E-Zertifikat 8 auf, prüft durch Auslesen des entsprechenden Eintrags in der Einlöse-Datenbank 73, ob dieser elektronische Coupon 80 noch "frei" ist oder bereits eingelöst wurde und damit "verbraucht", und gibt im positiven Fall ein Bestätigungssignal an die Akzeptanz-Station 3 zurück (s. Pfeil 94), das entsprechend angezeigt wird (beispielweise auf dem Display des Smartphones 30). Ist der elektronische Coupon 80 noch frei, so wird von der Akzeptanz-Station 3 der durch den elektronischen Coupon 80 definierte Promotionsartikel 4 an den Kunden 1 übergeben (s. Pfeil 95), und dabei der elektronische Coupon 80 von dem Server 7 in der Einlöse-Datenbank 73 mit dem Status "verbraucht" markiert. Später erhält dann die Akzeptanz-Station 3 eine Kompensation für die ausgegebenen Promotionsartikel 4 von dem Hersteller 5 (siehe Pfeil 96).

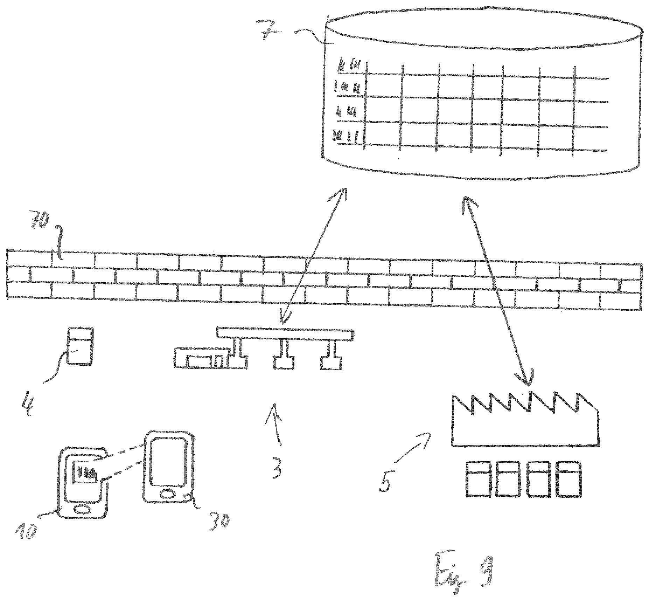

All dies erfolgt, ohne dass hierzu die persönlichen Daten des Kunden 1 erforderlich wären. Das Verfahren könnte somit vollständig anonym verlaufen. Im Grunde besteht somit eine vollständige Trennung in Bezug auf Kundendaten zwischen dem Server 7 einerseits und den übrigen beteiligten Einheiten, nämlich der Ausgabestation 2, der Akzeptanz-Station 3 sowie dem Hersteller 5. Dies ist in Figur 9 veranschaulicht. Die Firewall 70 wird lediglich gekreuzt durch Abfragedaten in Bezug auf die Gültigkeit des vorgelegten Coupons 80 und - summarisch - für den Hersteller 5, der lediglich Kenntnis erhält über die von der Akzeptanz-Station 3 ausgegebenen Promotionsartikel 4. Man erkennt, dass hierbei die Identität des Kunden 1 gegenüber der Akzeptanz-Station 3 und dem Hersteller 5 vollkommen verborgen bleibt, und zwar selbst dann, wenn der Server 7 selbst über diese Daten verfügen würde (was optional möglich ist). Damit fungiert die Firewall 70 als eine abschirmende Anonymisierungshülle.

Gemäß einem wesentlichen Merkmal der Findung bleibt das E-Zertifikat 8 erhalten, so dass es von dem Kunden 1 weiter genutzt werden kann. Damit wird der für das Marketing wichtige Aspekt der Personentreue verknüpft mit dem für den Kunden wichtigen Aspekt der Anonymität.

Somit ist es optional ohne signifikante Einbuße im Hinblick auf Datenschutz auch möglich, dass ein Zugangsmodul mit einem Internet-Interface 12 für die Nutzer 1 bereitgestellt wird. Mittels diesem können die Nutzer 1 optional persönliche Daten zu ihrem jeweiligen E-Zertifikat 8 hinterlegen (beispielsweise eine Adresse für E-Mail und/oder Altersmerkmale, insbesondere im Hinblick auf Volljährigkeit des Nutzers).

## Patentansprüche

1. Couponverfolgungssystem zur dynamischen Verarbeitung von Transaktionen elektronischer Coupons, umfassend einen Server (7), eine Mehrzahl von dezentralen Ausgabe-Stationen (2) für Promotionsartikel (4) und eine Mehrzahl von Akzeptanz-Stationen (3) für die Promotionsartikel , wobei der Server eine Transaktions-Datenbank (72) sowie eine Einlösungsdatenbank (73) und ein Transaktionsmodul (71) aufweist, das zur Schaffung und Bearbeitung von E-Zertifikaten (8) ausgebildet ist, wobei die E-Zertifikate jeweils einen eindeutigen Identifizierer und Datenfelder für ein oder mehrere eCoupons (80) zu den Promotionsartikeln aufweisen,
**dadurch gekennzeichnet, dass**
die Ausgabe-Stationen dazu ausgebildet sind, einen trägerunabhängigen Token (9, 9') an einen Nutzer (1) zu übergeben, Datensignale für die Ausgabe eines eCoupons (80) für einen der Promotionsartikel (4) zu generieren und an den Server (7) zu übermitteln, wobei der Token (9, 9') einen eindeutigen, vorzugsweise anonymen, Identifier für das E-Zertifikat (8) umfasst,
das Transaktionsmodul (71) dazu ausgebildet ist, anhand der Datensignale das E-Zertifikat (8) mit dem eCoupon (80) in die Transaktions-Datenbank (72) einzuspeichern, und bei einer Einlösung das E-Zertifikat (8) auszulesen und zu prüfen, ob ein angefragter eCoupon (80) in der Transaktions-Datenbank (72) gespeichert und in der Einlösungsdatenbank (73) als ,frei' eingetragen ist sowie ein entsprechendes Freigabesignal zu generieren oder zu sperren,
die Akzeptanz-Stationen (3) dazu ausgebildet sind, von dem Nutzer (1) vorgelegte Token (9, 9') mit einem eCoupon (80) zu erfassen, an den Server (7) zu übermitteln, Empfangen des Freigabesignals für den besagten eCoupon (80) und den Promotionsartikel zu dem besagten eCoupon (80) an den Nutzer (1)auszugeben, und ein Ausgabe-Bestätigungssignal an den Server (7) zu übermitteln, und das Transaktionsmodul (72) ferner dazu ausgebildet ist, auf das Ausgabe-Bestätigungssignal den eCoupon (80) in der Einlösungsdatenbank (73) als 'verbraucht' zu markieren, wobei die E-Zertifikate (8) persistent ausgeführt sind zur wiederholten Verwendung durch denselben Nutzer (1), indem ein weiterer eCoupon (80) in der Transaktions-Datenbank (72) zu dem E-Zertifikat (8) gespeichert ist.

2. Couponverfolgungssystem nach Anspruch 1, **dadurch gekennzeichnet, dass** die Ausgabe-Stationen (2) als mobile Computereinheiten, insbesondere Smartphones (20) ausgeführt sind, die mit einem angepassten Applikationsprogramm versehen sind.

3. Couponverfolgungssystem nach Anspruch 1 oder 2, **dadurch gekennzeichnet, dass** die Ausgabe-Stationen und/oder die Akzeptanz-Stationen von der Transaktions-Datenbank isoliert sind, insbesondere in Bezug auf im E-Zertifikat gespeicherte persönliche Daten des Nutzers.

4. Couponverfolgungssystem nach einem der vorangehenden Ansprüche, **dadurch gekennzeichnet, dass** die Ausgabe-Stationen eingerichtet sind für eine Altersverifikation und Übermittlung von deren Ergebnis an das Transaktionsmodul zur Einspeicherung in das E-Zertifikat.

5. Couponverfolgungssystem nach einem der vorangehenden Ansprüche, **dadurch gekennzeichnet, dass** die Ausgabe-Stationen eingerichtet sind für eine Bestimmung von Zugehörigkeit des Nutzers zu einer vordefinierten Gruppe und Übermittlung von einem entsprechenden Gruppenmerkmal an das Transaktionsmodul zur Einspeicherung in das E-Zertifikat.

6. Couponverfolgungssystem nach einem der vorangehenden Ansprüche, **dadurch gekennzeichnet, dass** am Server ein Zugangs-Modul mit einem Internet-Interface vorgesehen ist, wobei das Zugangs-Modul so ausgeführt ist, um Nutzern eine Eingabe von weiteren Informationsdaten zu ermöglichen und deren Speicherung in dem E-Zertifikat, wobei optional auch Kontaktdaten des Nutzers umfasst sind.

7. Couponverfolgungssystem nach Anspruch 6, **dadurch gekennzeichnet, dass** ein Reporting-Modul vorgesehen ist, welches über eine Schnittstelle mit dem Transaktions-Modul zum Zugriff auf die E-Zertifikate verbunden ist, wobei vorzugsweise persönliche Daten des Nutzer, insbesondere die Kontaktdaten, gesperrt sind.

8. Couponverfolgungssystem nach einem der vorangehenden Ansprüche, **dadurch gekennzeichnet, dass** am Server ein Limitierungsmodul vorgesehen ist, welches eine Promotions-Datenbank umfasst mit Einträgen für Volumen und/oder Zeitlimits, und das ferner mit dem Transaktionsmodul so zusammenwirkt, dass das Ausgeben des Promotionsartikels außerhalb der Limits gesperrt ist.

9. Couponverfolgungssystem nach einem der vorangehenden Ansprüche, **dadurch gekennzeichnet, dass** das Transaktionsmodul ferner mit einem Clearance-Modul derart zusammenwirkt, dass Abrechnungsdaten an Lieferanten der Promotionsartikel und Gutschriften an die Akzeptanz-Stationen generiert werden.

10. Couponverfolgungssystem nach einem der vorangehenden Ansprüche, **dadurch gekennzeichnet, dass** eine Anonymisierungshülle für das Transaktionsmodul vorgesehenist, welches dazu ausgebildet ist, Übermittlung von persönlichen Daten aus den E-Zertifikaten an Lieferant, Akzeptanz-Stationen und Ausgabe-Stationen zu sperren.

11. Couponverfolgungssystem nach einem der vorangehenden Ansprüche, **dadurch gekennzeichnet, dass** die Token wahlfrei trägerbehaftet und/oder trägerlos sind.

12. Verfahren zum Betreiben eines Kundenbindungssystems umfassend eine Verfolgung und dynamische Verarbeitung von Transaktionen elektronischer Coupons, wobei das System ausgebildet ist zur Schaffung und Bearbeitung von E-Zertifikaten zur Steuerung der Ausgabe von Promotionsartikeln, wobei die E-Zertifikate jeweils ein eindeutiges und anonymes Identifikationsmerkmal und Datenfelder für ein oder mehrere eCoupons zu den Promotionsartikeln aufweisen, Aktivieren eines E-Zertifikats mittels einer Ausgabe-Station umfassend ein Übermitteln eines trägerunabhängigen Tokens an einen Nutzer, wobei der Token das eindeutige und anonymes Identifikationsmerkmal aufweist;
Übermitteln einer Steuersignalfolge für einen eCoupon von der Ausgabe-Station an den Server bei einer Übergabe des eCoupons an den Nutzer;
Aufladen des E-Zertifikats mit dem eCoupon und Abspeichern in einer Transaktions-Datenbank;
Einlesen des Tokens an einer der dezentralen Akzeptanz-Stationen und Übermitteln an den Server, Auslesen des entsprechenden E-Zertifikats aus der Transaktions-Datenbank durch den Server und Prüfen der dazu gespeicherten eCoupons, Abfragen einer Einlöse-Datenbank ob ein bestimmter eCoupon als frei oder verbraucht markiert ist, und Erzeugen eines Freigabesignals, wenn der besagte eCoupon als frei markiert ist;
Übermitteln des Freigabesignals an die dezentrale Akzeptanz-Station und Ausgeben des Promotionartikels an den Nutzer;
Aktualisieren des E-Zertifikats, wobei der besagte eCoupon in der Einlöse-Datenbank als verbraucht markiert wird; Erfassen der als verbraucht markierten eCoupons und Ermitteln der ausgegebenen Promotionsartikel, Generieren eines Berichts zu den ausgegebenen Promotionsartikeln, und Berechnen einer Kompensationsleistung an die Ausgabestellen für die ausgegebenen Promotionsartikel,
Wiederholung des Vorgangs, wobei das E-Zertifikat beibehalten wird zur erneuten Verwendung durch denselben Nutzer.

13. Verfahren nach Anspruch 12, **gekennzeichnet durch** Verwendung eines Systems nach einem der Ansprüche 2 bis 11.
